# EUROPEAN PATENT APPLICATION

(11) **EP 3 757 399 A1**
(43) Date of publication of application: **30.12.2020**
(21) Application number: 19756662.3
(22) Date of filing: 23.01.2019
(51) Int. Cl.: F04D 29/28, A47L 9/00, F04D 29/62, H02K 7/14

(54) **BOSS, ROTATING FAN, ELECTRIC BLOWER, ELECTRIC CLEANER, AND HAND DRYER**

(30) Priority: 20.02.2018 JP 2018028326
(71) Applicant: Panasonic Intellectual Property Management Co., Ltd., Osaka-shi, Osaka 540-6207 (JP)
(72) Inventor: YAMAGUCHI, Akira, Osaka 540-6207 (JP)
(74) Representative: SSM Sandmair
(86) International application number: PCT/JP2019/001945
(87) International publication number: WO 2019/163371

(57) **Abstract**

A boss is attached to a shaft and includes a through hole extending along a longitudinal direction of the shaft. The through hole has a first hole part to which a tip end part of the shaft is press-fitted and fixed when the shaft is inserted into the through hole from one end of the through hole to a predetermined insertion position in the through hole, and a second hole part in which a screw groove is formed on an inner surface on a side closer to another end of the through hole than the predetermined insertion position.

## Description

### TECHNICAL FIELD

The present disclosure relates to a boss, a rotating fan, an electric blower, an electric vacuum cleaner, and a hand dryer. The present disclosure particularly relates to a fan boss and the like attached to a rotating shaft of an electric blower mounted on an electric vacuum cleaner or the like.

### BACKGROUND ART

A rotating fan is used in an electric blower mounted on an electric vacuum cleaner or the like. The rotating fan of the electric blower is fixed to a rotating shaft, and generates wind pressure by rotating at high speed.

In recent years, it has been required to suppress noise of an electric blower mounted on an electric vacuum cleaner or the like due to a demand for low noise of the electric vacuum cleaner. Specifically, it has been required to reduce rotational vibration, which is one of the causes of the noise of the electric blower.

The rotational vibration of the electric blower is mainly caused by deviation of weight balance in a rotation direction of a rotor and a rotating fan (residual unbalance of the rotor and the rotating fan) provided in an electric motor. For example, when a center of gravity of the rotor and the rotating fan is deviated from a rotating shaft, the rotation of the rotor generates a centrifugal force proportional to a distance between the center of gravity and the rotating shaft. As a result, when the rotor and the rotating fan rotate, a rotational balance becomes lost, and vibration is generated in the electric blower.

Therefore, in order to reduce the deviation of weight balance between the rotor and the rotating fan of the electric motor, the following measures have been taken regarding an amount of residual unbalance of the rotor. That is, by correcting and managing the amount of unbalance of each of the rotor and the rotating fan by component unit, the amount of unbalance for the entire rotating body including the rotor and the rotating fan is reduced.

However, the method of correcting the amount of unbalance of each of the rotor and the rotating fan, and thereafter, assembling the rotating fan and the rotating shaft of the rotor has the following problems. That is, it is not possible to ignore an unbalance component generated by deviation caused by a gap (clearance) between the rotating shaft of the rotor and a hole of the rotating fan into which the rotating axis is inserted. For this reason, even if the amount of unbalance of each of the rotor itself and the rotating fan itself is reduced as much as possible, there is a limit in reducing the rotational vibration.

On the other hand, in order to reduce the amount of unbalance generated by the deviation caused by the gap between the rotating shaft of the rotor and the hole of the rotating fan, it is conceivable to minimize a dimension of the gap between the rotating shaft and the hole of the rotating fan. However, if the gap between the rotating shaft and the hole of the rotating fan is made too small, it becomes difficult to insert the rotating fan into the rotating shaft of the rotor, and the workability of assembling the rotor and the rotating fan becomes deteriorated.

Therefore, conventionally, there has been proposed a method of press-fitting a rotating shaft of a rotor into a hole of a rotating fan to fix the rotating fan to the rotating shaft (for example, see Patent Literature 1). In this method, for example, a fan boss is provided on the rotating fan, and the rotating shaft of the rotor is press-fitted into a hole of the fan boss. As described above, by using the method of press-fitting the rotating shaft into the hole of the rotating fan, the gap between the rotating shaft and the rotating fan can be eliminated. Therefore, by using this method, it is possible to eliminate the amount of unbalance generated by the deviation caused by the gap between the rotating shaft and the hole of the rotating fan. Thereby, the rotational vibration can be effectively suppressed, and an electric blower with low vibration can be realized.

However, in the method of press-fitting the rotating shaft into the hole of the rotating fan (the hole of the fan boss), once the rotating fan is press-fitted and fixed to the rotating shaft, the rotating fan cannot be easily removed from the rotating shaft. For this reason, there is a problem that the electric blower cannot be easily repaired, in the electric blower or the like equipped with the electric motor in which the rotating shaft of the rotor is press-fitted and fixed to the hole of the rotating fan. In particular, when a failure in the electric blower (for example, an electric motor failure) occurs even if the rotating fan has no problem, the rotating fan cannot be easily removed with the rotating fan press-fitted into the rotating shaft, and therefore, it is difficult to repair the electric blower.

For this reason, in the electric blower equipped with the electric motor in which the rotating shaft of the rotor is press-fitted and fixed to the rotating fan, the electric blower itself has to be disposed of when the failure occurs. Therefore, the cost of spoilage increases, resulting in a high-priced electric blower.

When the rotating shaft of the rotor is press-fitted and fixed to the hole of the fan boss of the rotating fan, a method is conceivable in which the rotating fan is removed from the rotating shaft by heating the fan boss to ease a fitting allowance of press-fitting. However, this method requires dedicated equipment and jigs. Therefore, even if the rotating fan can be removed from the rotating shaft, a large number of man-hours are required.

A method is also conceivable in which the rotating fan is removed from the rotating shaft by destroying the rotating fan. However, despite the requirement of a large number of man-hours, this method causes components of the electric motor such as the rotating shaft to be damaged. Accordingly, this method has a problem that a large number of electric motors that cannot be reused are generated as a result.

### Citation List

### Patent Literature

PTL 1: Unexamined Japanese Patent Publication No. H08-31993

### SUMMARY OF THE INVENTION

The present disclosure has been made to solve the above problem. It is an object of the present disclosure to provide a boss that can be easily removed from a shaft such as a rotating shaft press-fitted into the boss, a rotating fan including the boss, an electric blower with low vibration including a rotating shaft press-fitted and fixed to the boss of the rotating fan, and the like.

In order to achieve the above object, one aspect of the boss according to the present disclosure is attached to a shaft and has a through hole extending along a longitudinal direction of the shaft. The through hole has a first hole part to which a tip end part of the shaft is press-fitted and fixed when the shaft is inserted from one end of the through hole to a predetermined insertion position in the through hole, and a second hole part in which a screw groove is formed on an inner surface on a side closer to another end of the through hole than the predetermined insertion position.

One aspect of the rotating fan according to the present disclosure includes the boss and an impeller to which the boss is fixed.

In addition, one aspect of the electric blower according to the present disclosure includes the rotating fan and the shaft whose tip end part is press-fitted and fixed to the boss of the rotating fan.

Further, one aspect of an electric vacuum cleaner according to the present disclosure includes the electric blower and a controller that controls the electric blower.

Still further, one aspect of a hand dryer according to the present disclosure includes the electric blower and a controller that controls the electric blower.

According to the present disclosure, it is possible to realize the boss that can be easily removed from the shaft such as the rotating shaft press-fitted into the boss, the rotating fan including the boss, the electric blower with low vibration including the rotating shaft press-fitted and fixed to the boss of the rotating fan, and the like.

### BRIEF DESCRIPTION OF DRAWINGS

FIG. 1 is a cross-sectional view of an electric blower according to a first exemplary embodiment.
FIG. 2 is a perspective view of the electric blower according to the first exemplary embodiment with a fan case removed.
FIG. 3 is a cross-sectional view showing a rotating fan and a rotating shaft used in the electric blower according to the first exemplary embodiment.
FIG. 4 is a partially enlarged cross-sectional view around a fan boss of the electric blower according to the first exemplary embodiment.
FIG. 5 is a half sectional perspective view of the fan boss used in the rotating fan of the electric blower according to the first exemplary embodiment.
FIG. 6A is a diagram showing a state before a male screw is inserted into the fan boss in a case when the rotating fan is removed from the rotating shaft in the electric blower according to the first exemplary embodiment.
FIG. 6B is a diagram showing a state during which a male screw is being screwed into the fan boss in the case when the rotating fan is removed from the rotating shaft in the electric blower according to the first exemplary embodiment.
FIG. 6C is a diagram showing a state in which the male screw screwed into the fan boss abuts to the rotating shaft in the case when the rotating fan is removed from the rotating shaft in the electric blower according to the first exemplary embodiment.
FIG. 6D is a diagram showing a state in which the rotating fan is removed from the rotating shaft in the case when the rotating fan is removed from the rotating shaft in the electric blower according to the first exemplary embodiment.
FIG. 7 is a partially enlarged cross-sectional view of an electric blower according to a modified example of the first exemplary embodiment.
FIG. 8 is a partially enlarged cross-sectional view of an electric blower according to a second exemplary embodiment.
FIG. 9 is a perspective view of an electric blower according to a third exemplary embodiment with a fan case removed.
FIG. 10 is a cross-sectional view of a rotating fan used in the electric blower according to the third exemplary embodiment.
FIG. 11 is a cross-sectional view of a rotating fan used in an electric blower according to a modified example of the third exemplary embodiment.
FIG. 12 is a schematic diagram showing an example of an electric vacuum cleaner according to a fourth exemplary embodiment.
FIG. 13 is a schematic diagram showing an example of a hand dryer according to the fourth exemplary embodiment.

### DESCRIPTION OF EMBODIMENTS

Hereinafter, exemplary embodiments of the present disclosure are described with reference to the drawings. Each of the exemplary embodiments described below shows a specific example of the present disclosure. Therefore, numeric values, shapes, materials, constituents, arrangement positions and connection modes of the constituents, and the like, which are shown in the following exemplary embodiments, are merely examples, and are not intended to limit the present disclosure. Further, among the constituents in the following exemplary embodiments, constituents which are not recited in the independent claim representing the most generic concept of the present disclosure are described as arbitrary constituents.

Each drawing is a schematic diagram, and is not necessarily strictly illustrated. In each of the drawings, substantially the same constituents are denoted by the same reference numerals, and redundant description is omitted or simplified.

### (First exemplary embodiment)

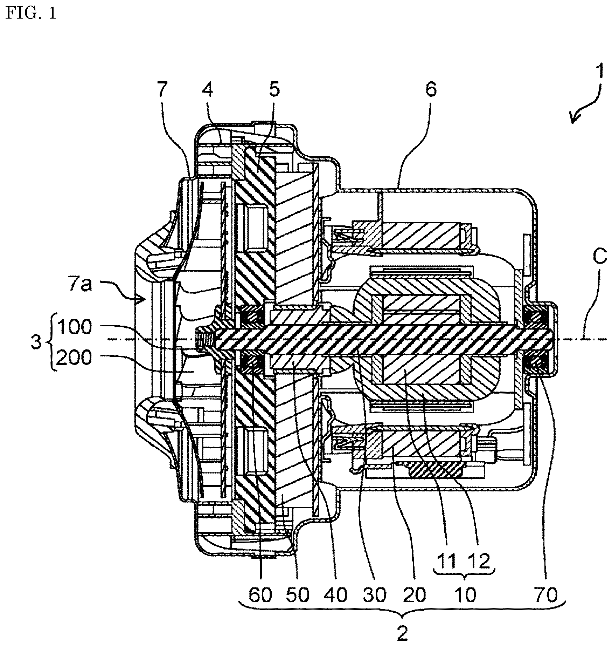

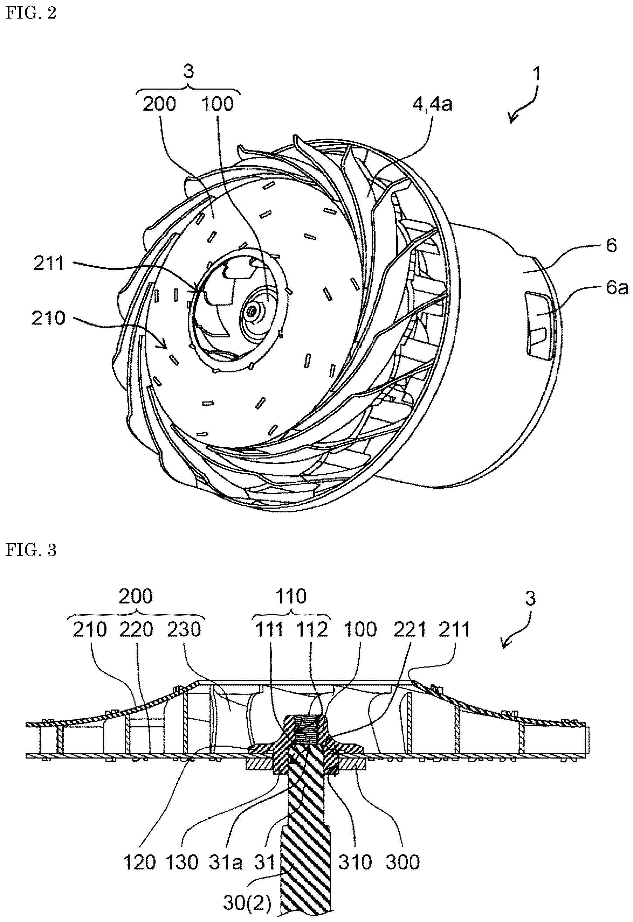

A configuration of electric blower 1 according to a first exemplary embodiment is described with reference to FIG. 1 and FIG. 2. FIG. 1 is a cross-sectional view of electric blower 1 according to the first exemplary embodiment. FIG. 2 is a perspective view of electric blower 1 according to the first exemplary embodiment with fan case 7 removed.

As shown in FIGS. 1 and 2, electric blower 1 according to the present exemplary embodiment includes electric motor 2 (motor), rotating fan 3, air guide 4, bracket 5, frame 6, and fan case 7.

Electric motor 2 rotates rotating fan 3 as a rotating load. A detailed configuration of electric motor 2 is described later.

Rotating fan 3 sucks air into an outer casing (housing) constituted of frame 6 and fan case 7. Rotating fan 3 is attached to a tip end part of rotating shaft 30 of electric motor 2. Rotating shaft 30 is rotated by the rotation of rotor 10 provided in electric motor 2, causing rotating fan 3 to rotate. Although details are described later, rotating fan 3 is attached to rotating shaft 30 by fixing rotating shaft 30 to fan boss 100 provided in rotating fan 3. As an example, rotating fan 3 is a centrifugal fan that can obtain high suction pressure. When rotating fan 3 rotates, wind pressure is generated, and the air is sucked in from intake port 7a of fan case 7.

Air guide 4 forms a ventilation path on an outer periphery of rotating fan 3. Air guide 4 is formed so as to surround rotating fan 3. Air guide 4 has a plurality of diffuser blades 4a as guide plates for rectifying a flow of gas. Air guide 4 rectifies the flow of the air sucked from intake port 7a of fan case 7 by the rotation of rotating fan 3, generates a swirling flow, and smoothly flows the sucked gas into frame 6.

Bracket 5 covers an opening of frame 6 together with air guide 4. Bracket 5 is arranged so as to cover first bearing 60. Bracket 5 has an opening. The air rectified by air guide 4 passes through the opening of bracket 5 and flows into frame 6.

Frame 6 is a first casing that accommodates electric motor 2. At a bottom of frame 6, a plurality of exhaust ports 6a (see FIG. 2) are formed for discharging the air sucked by the rotation of rotating fan 3.

Fan case 7 is a second casing that accommodates rotating fan 3. Fan case 7 is fixed to frame 6 so as to cover rotating fan 3, air guide 4, and bracket 5. Fan case 7 has intake port 7a for sucking outside air.

Next, a detailed configuration of electric motor 2 is described. As shown in FIG. 1, electric motor 2 in the present exemplary embodiment is a commutator motor with a brush. Electric motor 2 includes rotor 10, stator 20, rotating shaft 30, commutator 40, brush 50, first bearing 60, and second bearing 70.

Rotor 10 rotates about rotating shaft 30 as a rotation center by magnetic force of stator 20. In the present exemplary embodiment, rotor 10 is an inner rotor, and is arranged inside stator 20 as shown in FIG. 1. Specifically, rotor 10 is surrounded by stator 20 with a small air gap interposed between rotor 10 and stator 20. Rotor 10 has core 11 and coil 12. The rotor 10 rotates at high speed of, for example, 40,000 revolutions per minute (rpm).

Stator 20 generates magnetic force acting on rotor 10. In the present exemplary embodiment, stator 20 is arranged so as to surround rotor 10. Stator 20 is constituted of, for example, a permanent magnet having an S pole and an N pole. Stator 20 may be constituted of a core (stator core) and a winding coil (stator coil). Stator 20 is, for example, fixed to frame 6.

Rotating shaft 30 is a shaft that is to be a center when rotor 10 rotates. Rotating shaft 30 extends in a longitudinal direction that is a direction of shaft center C. Rotating shaft 30 is formed of, for example, a metal rod. Rotating shaft 30 is fixed to rotor 10. Specifically, for example, rotating shaft 30 is fixed to core 11 in a state of passing through a center of core 11 of rotor 10 so as to extend on both sides of rotor 10. As an example, rotating shaft 30 is fixed to a through hole of core 11 of rotor 10 by press-fitting.

Rotating shaft 30 penetrates rotor 10 and is arranged so as to extend on both left and right sides of rotor 10 in the drawing. One end of rotating shaft 30 (end on a side of rotating fan 3) is supported by first bearing 60. On the other hand, another end of rotating shaft 30 is supported by second bearing 70. As an example, first bearing 60 and second bearing 70 are bearings that support rotating shaft 30. Thus, both ends of rotating shaft 30 are held by first bearing 60 and second bearing 70 so as to be rotatable.

The one end of rotating shaft 30 protrudes from first bearing 60 and penetrates through bracket 5. Rotating fan 3 is attached to the tip end part of rotating shaft 30 protruding from bracket 5.

Commutator 40 is attached to rotating shaft 30. In the present exemplary embodiment, commutator 40 is fixed to a portion of rotating shaft 30 between rotor 10 and first bearing 60. Commutator 40 is electrically connected to coil 12 provided in rotor 10. Commutator 40 comes into sliding contact with brush 50. Commutator 40 is constituted of a plurality of segments that are insulated and separated from each other in the rotation direction of rotating shaft 30.

Brush 50 is a power supply brush for supplying power to rotor 10 by coming into contact with commutator 40. Brush 50 supplies an armature current to commutator 40 by coming into contact with commutator 40. As an example, brush 50 is a carbon brush. Brush 50 has a long, substantially rectangular parallelepiped shape.

Brush 50 is arranged so as to be slidable on commutator 40. Brush 50 is provided as a pair. The pair of brushes 50 are arranged to face each other with commutator 40 interposed therebetween so as to sandwich commutator 40. Specifically, inner tip ends of the pair of brushes 50 are in contact with commutator 40. In the present exemplary embodiment, an end face on an inner side (a side of rotating shaft 30) in the longitudinal direction of brush 50 is formed as a contact surface with commutator 40.

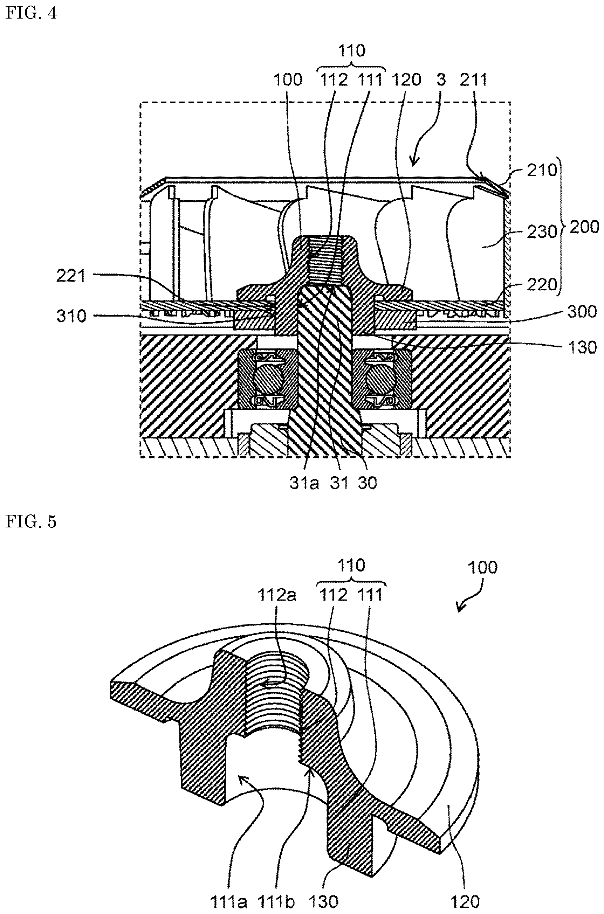

Next, a detailed configuration of rotating fan 3 included in electric blower 1 is described using FIGS. 3 to 5 with reference to FIGS. 1 and 2. FIG. 3 is a cross-sectional view showing rotating fan 3 and rotating shaft 30 used in electric blower 1 according to the first exemplary embodiment. FIG. 4 is a partially enlarged cross-sectional view around fan boss 100 of electric blower 1. FIG. 5 is a half sectional perspective view of a fan boss 100 used in rotating fan 3 of electric blower 1. FIG. 3 illustrates only rotating fan 3 and rotating shaft 30.

As shown in FIGS. 3 and 4, electric blower 1 includes rotating fan 3 and rotating shaft 30 whose tip end part is press-fitted and fixed to fan boss 100 of rotating fan 3.

Rotating fan 3 includes fan boss 100 and impeller 200 to which fan boss 100 is fixed. Rotating fan 3 further includes back plate 300 having an annular shape and through hole 310. Fan boss 100, impeller 200, and back plate 300 are made of, for example, metallic material such as aluminum or iron.

Fan boss 100 is an example of a boss attached to rotating shaft 30. As shown in FIGS. 3 to 5, fan boss 100 has through hole 110 extending along the longitudinal direction of rotating shaft 30. Through hole 110 has first hole part 111 and second hole part 112 communicating with first hole part 111, each of which is a part of through hole 110. A shape of the holes of each of first hole part 111 and second hole part 112 is a hollow substantially cylindrical shape having a constant inner diameter. However, in the present exemplary embodiment, an inner diameter of first hole part 111 is larger than an inner diameter of second hole part 112. Therefore, a step is formed at a boundary between first hole part 111 and second hole part 112. Specifically, as shown in FIG. 5, an inner surface of first hole part 111 is constituted of inner side surface 111a and bottom surface 111b. An inner surface of second hole part 112 is constituted only of inner side surface 112a. Bottom surface 111b of first hole part 111 is formed as a step surface.

First hole part 111 is a portion in the through hole 110 to which the tip end part of rotating shaft 30 is press-fitted and fixed when rotating shaft 30 is inserted from one end of through hole 110 to a predetermined insertion position in through hole 110. That is, first hole part 111 is a portion that functions as a press-fit portion into which rotating shaft 30 is press-fitted and fixed. As shown in FIGS. 3 and 4, first hole part 111 is a portion of through hole 110 where rotating shaft 30 exists when rotating shaft 30 is inserted into through hole 110.

Rotating shaft 30 is inserted halfway in through hole 110. That is, rotating shaft 30 exists only in first hole part 111 among first hole part 111 and second hole part 112, and rotating shaft 30 does not exist in second hole part 112. In the present exemplary embodiment, rotating shaft 30 is inserted to a position of the boundary (step) between first hole part 111 and second hole part 112. Specifically, when rotating shaft 30 is inserted into through hole 110 from first hole part 111, tip end surface 31a (top surface) of tip end part 31 of rotating shaft 30 abuts to the step surface of the step between first hole part 111 and second hole part 112 (that is, bottom surface 111b of first hole part 111). Therefore, rotating shaft 30 is inserted into through hole 110 until tip end surface 31a of tip end part 31 of rotating shaft 30 comes into contact with bottom surface 111b of first hole part 111. As described above, in the present exemplary embodiment, the predetermined insertion position of rotating shaft 30 in through hole 110 is a position of bottom surface 111b of first hole part 111, which is the position of the boundary between first hole part 111 and second hole part 112.

Second hole part 112 is a portion in which a screw groove is formed on the inner surface of through hole 110 on a side closer to another end of through hole 110 than the predetermined insertion position of rotating shaft 30. Specifically, as shown in FIG. 5, a screw groove is formed on inner side surface 112a of second hole part 112. For example, by machining a female screw hole in second hole part 112, the screw groove can be formed in inner side surface 112a of second hole part 112. In the present exemplary embodiment, the screw groove is formed on an entire of inner side surface 112a of second hole part 112. Note that the screw groove is not formed on the inner surface of first hole part 111, and the inner surface of first hole part 111 is a smooth surface.

A shape of the screw groove formed on the inner surface of second hole part 112 is a shape into which a standardized screw can be screwed. The standardized screw refers to a screw specified by an international standard, a national standard of each country, or an organization standard determined by each organization. Specifically, the screw refers to one defined by the International Organization for Standardization (ISO), the Japanese Industrial Standard (JIS), the American National Standard Committee (ANSC), and the like. Therefore, by rotating a standardized male screw in a tightening direction (for example, clockwise) and screwing the male screw into second hole part 112, the male screw can be screwed into second hole part 112. That is, second hole part 112 is a screw insertion hole into which a screw can be inserted. The male screw screwed into second hole part 112 can be removed from second hole part 112 by rotating in a direction opposite to the tightening direction (for example, counterclockwise).

In a state in which electric blower 1 is driven to rotate rotating fan 3, the male screw is not screwed into second hole part 112 of fan boss 100, and second hole part 112 is in an open state.

Further, fan boss 100 has flange part 120 that protrudes in a flange shape, and cylindrical part 130 that protrudes downward from flange part 120 in a cylindrical shape. First hole part 111 of through hole 110 is provided in cylindrical part 130. Flange part 120 and cylindrical part 130 are used when fan boss 100 is fixed to impeller 200.

As shown in FIG. 3, impeller 200 has first side plate 210 having suction port 211 at a center, second side plate 220 facing first side plate 210 with a predetermined interval, and a plurality of fan blades 230 sandwiched between first side plate 210 and second side plate 220. In the present exemplary embodiment, first side plate 210, second side plate 220, and fan blades 230 are constituted of aluminum alloy plates.

As shown in FIG. 2, first side plate 210 is an upper plate located on an upper side (a side of fan case 7). Suction port 211 provided in first side plate 210 faces intake port 7a of fan case 7 (see FIG. 1). First side plate 210 can be formed by drawing a circular flat plate having an opening into a substantially truncated cone shape.

As shown in FIG. 3, second side plate 220 is a lower plate located on a lower side (a side of frame 6). Second side plate 220 is a circular flat plate. Second side plate 220 has through hole 221 provided at a center of second side plate 220. Fan boss 100 is attached to through hole 221.

Each of the plurality of fan blades 230 is formed so as to be curved in a circular arc shape. The plurality of fan blades 230 are arranged radially so as to surround a center. Fan blade 230 is fixed to each of first side plate 210 and second side plate 220 by caulking.

Assembling of rotating fan 3 constituted as described above can be performed, for example, as follows. An example of an assembling method of rotating fan 3 is described with reference to FIGS. 3 and 4.

First, cylindrical part 130 of fan boss 100 is inserted into through hole 221 of second side plate 220 of impeller 200. Then, cylindrical part 130 protruding from a back side of second side plate 220 is inserted into through hole 310 of back plate 300. At this time, a periphery of through hole 221 of second side plate 220 is in a state of being sandwiched between flange 120 of fan boss 100 and back plate 300. In this state, flange part 120 of fan boss 100 and back plate 300 are caulked, thereby second side plate 220, fan boss 100, and back plate 300 are mechanically fixed by caulking.

Next, the plurality of fan blades 230 are arranged on second side plate 220 by inserting caulking claws provided on one side end surface of fan blades 230 into square holes formed in second side plate 220. Then, caulking claws provided on another side end surface of fan blades 230 are inserted into square holes formed in first side plate 210 to arrange first side plate 210 in a manner of sandwiching fan blades 230 with second side plate 220. By caulking the caulking claws of fan blades 230, fan blades 230, and first side plate 210 and the second side plate 220 are mechanically fixed by caulking. Thereby, rotating fan 3 can be manufactured.

Rotating fan 3 thus manufactured is fixed to rotating shaft 30 of electric motor 2 (rotor 10). In this case, rotating shaft 30 of electric motor 2 is press-fitted into through hole 110 (first hole part 111) of fan boss 100 of rotating fan 3. Thereby, rotating shaft 30 and rotating fan 3 are fixed.

In the present exemplary embodiment, in through hole 110 of fan boss 100, because the inner diameter of first hole part 111 is larger than the inner diameter of second hole part 112, the step is formed at the boundary of first hole part 111 and second hole part 112. As a result, when rotating shaft 30 is press-fitted into through hole 110 and pushed in, tip end part 31 of rotating shaft 30 stays at the step between first hole part 111 and second hole part 112. Therefore, the screw groove formed on the inner surface of second hole part 112 is not crushed by rotating shaft 30.

After rotating fan 3 and rotating shaft 30 of electric motor 2 are fixed, electric motor 2 to which rotating fan 3 is fixed is cased in frame 6 and fan case 7, together with other components such as air guide 4 and bracket 5. Thereby, electric blower 1 shown in FIG. 2 is completed.

In electric blower 1 configured as described above, when rotor 10 of electric motor 2 rotates, rotating fan 3 rotates, and the air is sucked into fan case 7 from intake port 7a of fan case 7. As a result, the air flows into an inside of rotating fan 3 from suction port 211 of rotating fan 3. The air sucked by rotating fan 3 is compressed to high pressure by fan blades 230 of rotating fan 3 and discharged radially from an outer peripheral side of rotating fan 3. The air sucked by rotating fan 3 is guided to an outer periphery of fan case 7 by diffuser blades 4a of air guide 4 surrounding rotating fan 3, forms a swirling flow in a void between air guide 4 and fan case 7, and flows into frame 6. The inflowed swirling flow is discharged out of electric blower 1 from exhaust port 6a of frame 6 while cooling rotor 10 and stator 20 of electric motor 2.

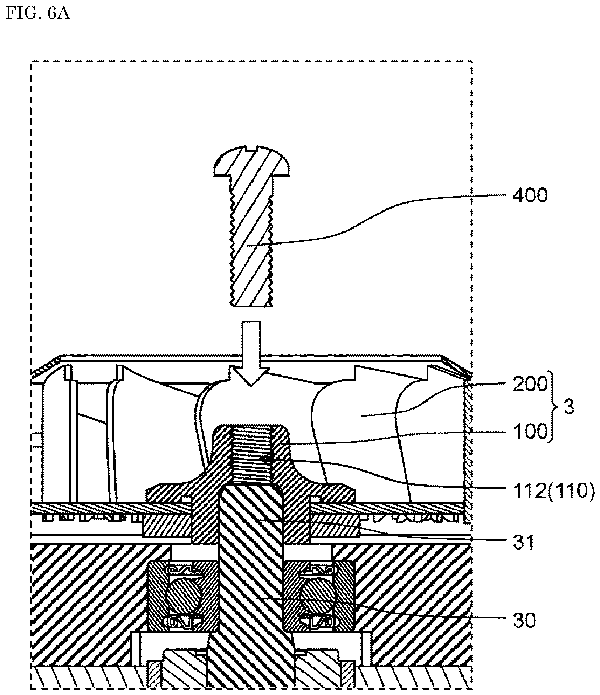

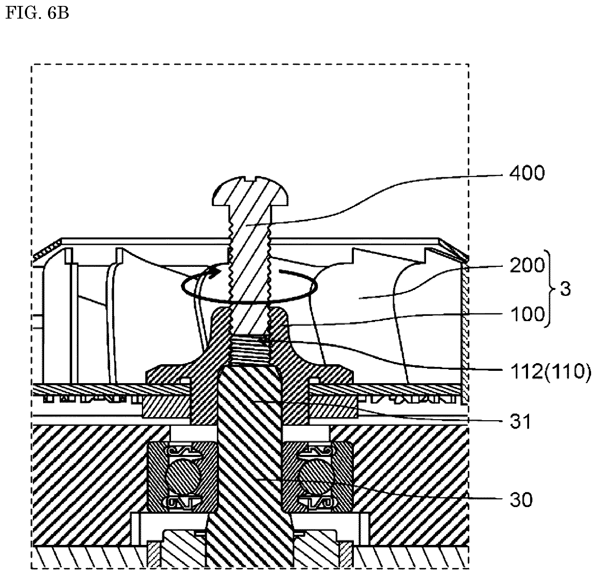

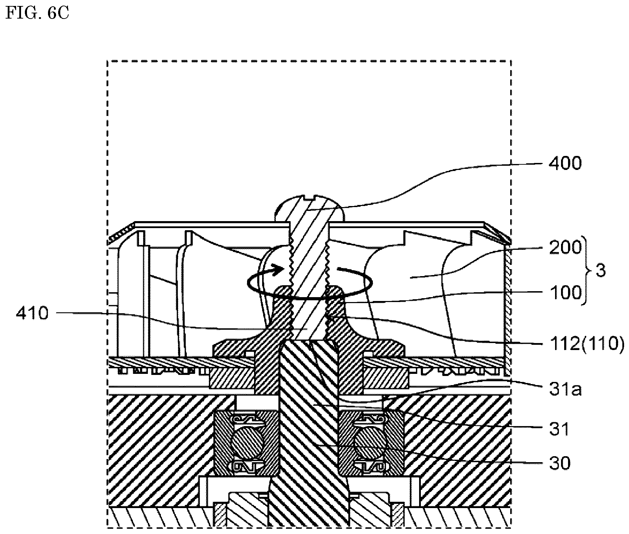

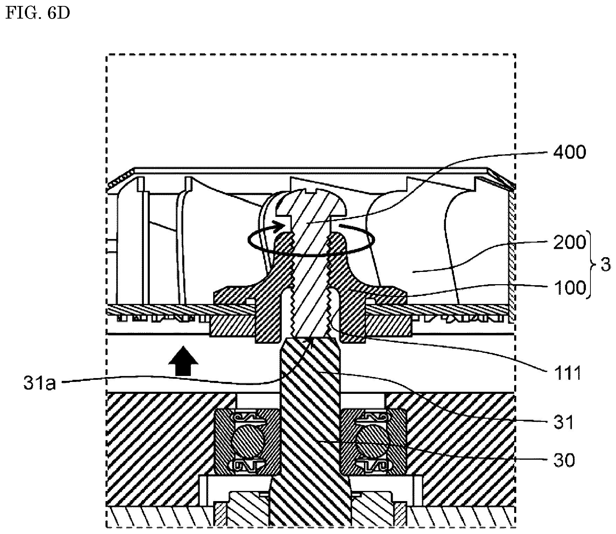

Next, a method of removing rotating fan 3 press-fitted and fixed to rotating shaft 30 of electric motor 2 from rotating shaft 30 is described with reference to FIGS. 6A to 6D. FIGS. 6A to 6D are diagrams for describing the method of removing rotating fan 3 press-fitted and fixed to rotating shaft 30 of electric motor 2. FIG. 6A is a diagram showing a state before male screw 400 is inserted into fan boss 100 in a case when rotating fan 3 is removed from rotating shaft 30 in electric blower 1 according to the first exemplary embodiment. FIG. 6B is a diagram showing a state during which male screw 400 is being screwed into fan boss 100 in the case when rotating fan 3 is removed from rotating shaft 30 in electric blower 1 according to the first exemplary embodiment. FIG. 6C is a diagram showing a state in which male screw 400 screwed into the fan boss 100 abuts to rotating shaft 30 in the case when rotating fan 3 is removed from rotating shaft 30 in electric blower 1 according to the first exemplary embodiment. FIG. 6D is a diagram showing a state in which rotating fan 3 is removed from rotating shaft 30 in the case when rotating fan 3 is removed from rotating shaft 30 in electric blower 1 according to the first exemplary embodiment.

In the case when rotating fan 3 press-fitted and fixed to rotating shaft 30 of electric motor 2 is removed from rotating shaft 30, male screw 400 is prepared as shown in FIG. 6A. Male screw 400 may be any screw as long as the screw can be screwed into second hole part 112 of fan boss 100. In the present exemplary embodiment, a shape of the screw groove formed in the inner surface of second hole part 112 is a shape into which a standardized screw can be screwed. Therefore, the standardized screw can be used as male screw 400. That is, a general-purpose screw can be used.

As shown in FIG. 6B, male screw 400 is being screwed into second hole part 112 of fan boss 100 by a driver (not shown) or the like. Then, as shown in FIG. 6C, tip end part 410 of male screw 400 comes into contact with tip end surface 31a of tip end part 31 of rotating shaft 30.

In a state of tip end part 410 of the male screw 400 abutting on tip end surface 31a of tip end part 31 of rotating shaft 30, male screw 400 is further screwed. At this time, a reaction force of thrust generated when male screw 400 is screwed is generated. As shown in FIG. 6D, the reaction force acts in a direction of pulling out rotating shaft 30 from first hole part 111 of fan boss 100. As a result, in conjunction with the screwing (rotation) of male screw 400, rotating fan 3 incorporating fan boss 100 separates from rotating shaft 30 so as to become loose. Thereby, rotating fan 3 can be removed from rotating shaft 30.

In order to remove rotating fan 3 from rotating shaft 30 by screwing male screw 400, tip end part 410 of male screw 400 needs to reach first hole part 111 of through hole 110 of fan boss 100. In this case, assuming that the inner diameter of second hole part 112 of through hole 110 (i.e., the inner diameter of the screw groove at a groove bottom) is dM, and the inner diameter of first hole part 111 (that is, a diameter of rotating shaft 30) is dS, it is necessary to satisfy the relationship dM ≤ dS.

As described above, by using fan boss 100 according to the present exemplary embodiment, rotating fan 3 can be fixed to rotating shaft 30 by press-fitting. Therefore, the amount of unbalance that is generated when rotating fan 3 is attached to rotating shaft 30 can be eliminated. Thereby, the rotational vibration can be effectively suppressed. Therefore, electric blower 1 with low vibration can be realized.

Moreover, by using fan boss 100 according to the present exemplary embodiment, even in the case of rotating fan 3 press-fitted and fixed to rotating shaft 30, rotating fan 3 can be easily removed from rotating shaft 30 without damaging rotating fan 3 and rotating shaft 30 by only using the male screw and the driver for screwing the male screw.

Thereby, when rotating fan 3 is removed, rotating fan 3, rotating shaft 30, and the like can be prevented from being damaged. In addition, because rotating fan 3 and electric motor 2 can be reused as they are, spoilage of components can be reduced.

In addition, when a failure occurs in electric blower 1, electric blower 1 can be easily repaired by removing rotating fan 3. Therefore, there is no need to dispose of electric blower 1 because rotating fan 3 cannot be removed as before.

As described above, electric blower 1 with low cost can be realized by reducing the spoilage of components and also eliminating the disposal of electric blower 1.

In addition, rotating fan 3 can be easily removed from rotating shaft 30 using only general-purpose tools such as the male screw and the driver. Therefore, rotating fan 30 can be removed at any place without using dedicated equipment or jigs. Therefore, when electric blower 1 is repaired or the like, the workability of removing rotating fan 3 can be greatly improved.

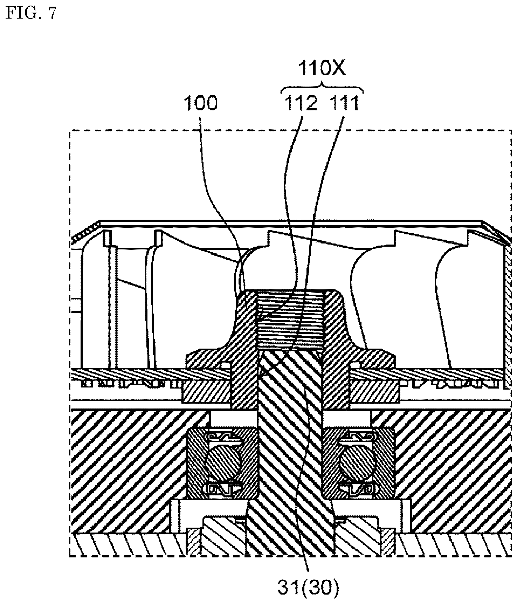

FIG. 7 is a partially enlarged cross-sectional view of an electric blower according to a modified example of the first exemplary embodiment. In fan boss 100 according to the present exemplary embodiment, as shown in FIG. 4, through hole 110 is configured such that the inner diameter of first hole part 111 is larger than the inner diameter of second hole part 112, but the configuration is not limited to this. Specifically, as shown in FIG. 7, through hole 110X may be configured such that the inner diameter of first hole part 111 and the inner diameter of second hole part 112 are the same.

As described above, fan boss 100 according to the present exemplary embodiment corresponding to the boss is a boss attached to rotating shaft 30 corresponding to the shaft, and has through hole 110 extending along the longitudinal direction of the shaft. Through hole 110 includes first hole part 111 into which tip end part 31 of the shaft is press-fitted and fixed when the shaft is inserted from one end of through hole 110 to a predetermined insertion position in through hole 110, and second hole part 112 in which a screw groove is formed on an inner surface on a side closer to another end of through hole 110 than the predetermined insertion position. In other words, through hole 110 has first hole part 111 and second hole part 112. When the shaft is inserted from the one end of through hole 110 to the predetermined insertion position in through hole 110, first hole part 111 is a portion to which tip end part 31 of the shaft is press-fitted and fixed. Similarly, second hole part 112 is a portion in which a screw groove is formed on the inner surface on the side closer to the other end of through hole 110 than the predetermined insertion position.

Thereby, rotating fan 3 can be fixed to rotating shaft 30 by press-fitting. Therefore, the amount of imbalance that occurs when rotating fan 3 is attached to rotating shaft 30 can be eliminated. Therefore, the rotational vibration can be effectively suppressed. Therefore, electric blower 1 with low vibration can be realized.

The inner diameter of first hole part 111 is preferably larger than the inner diameter of second hole part 112.

Further, the inner diameter of first hole part 111 and the inner diameter of second hole part 112 may be the same.

Further, the shape of the screw groove is preferably a shape into which the standardized screw can be screwed.

Further, rotating fan 3 includes the boss and impeller 200 to which the boss is fixed. Thereby, the boss into which the shaft such as the rotating shaft is press-fitted can be easily removed from the shaft.

Further, electric blower 1 includes rotating fan 3 and a shaft whose tip end part 31 is press-fitted and fixed to the boss of rotating fan 3. Thereby, the boss into which the shaft such as the rotating shaft is press-fitted can be easily removed from the shaft.

### (Second exemplary embodiment)

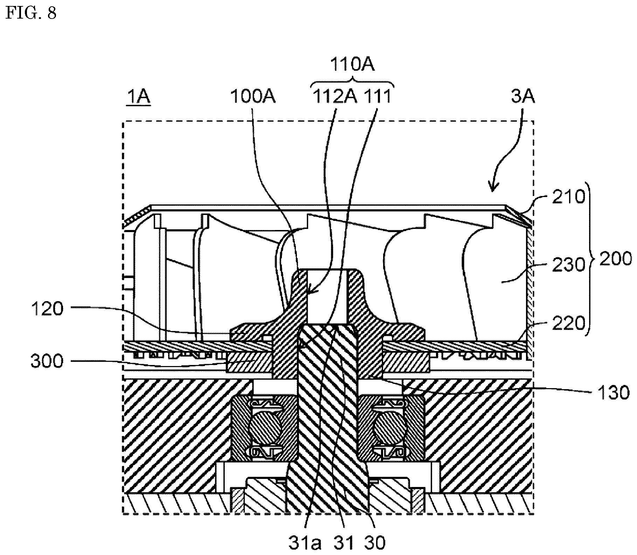

Next, electric blower 1A according to a second exemplary embodiment is described with reference to FIG. 8. FIG. 8 is a partially enlarged cross-sectional view of electric blower 1A according to the second exemplary embodiment.

Electric blower 1A according to the present exemplary embodiment differs from electric blower 1 according to the first exemplary embodiment in a shape of fan boss 100A of rotating fan 3A. Specifically, fan boss 100A in the present exemplary embodiment has through hole 110A constituted of first hole part 111 and second hole part 112A, similarly to fan boss 100 in the first exemplary embodiment. However, a screw groove is not formed in an inner surface of second hole part 112A in fan boss 100A in the present exemplary embodiment. The inner surface of second hole part 112A is a smooth surface, similarly to an inner surface of first hole part 111. Further, in the present exemplary embodiment, an inner diameter of second hole part 112A has a dimension into which a rolling screw can be screwed.

Other configurations of electric blower 1A according to the present exemplary embodiment are the same as those of electric blower 1 according to the first exemplary embodiment. For example, also in the present exemplary embodiment, rotating shaft 30 is press-fitted and fixed to fan boss 100A of rotating fan 3A. Specifically, tip end part 31 of rotating shaft 30 is press-fitted into first hole part 111 of through hole 110A in fan boss 100A.

In electric blower 1A of the present exemplary embodiment, in the case when rotating fan 3A press-fitted and fixed to rotating shaft 30 of electric motor 2 is removed from rotating shaft 30, the rolled screw is used. Specifically, as in the first exemplary embodiment, the rolled screw is screwed into second hole part 112A by a driver or the like. At this time, the rolled screw is screwed while a screw groove is cut on the inner surface of second hole part 112A by the rolled screw. Accordingly, similarly to the first exemplary embodiment, rotating fan 3A can be removed from rotating shaft 30 by reaction force of thrust when the rolled screw is screwed.

According to fan boss 100A and electric blower 1A in the present exemplary embodiment, as in the first exemplary embodiment, rotating fan 3A is fixed to rotating shaft 30 by press-fitting. As a result, it is possible to eliminate the amount of unbalance generated when rotating fan 3A is attached to rotating shaft 30. Therefore, the rotational vibration can be suppressed, and electric blower 1A with low vibration can be realized.

In the present exemplary embodiment, even in the case of rotating fan 3A press-fitted and fixed to rotating shaft 30, rotating fan 3A can be easily removed from rotating shaft 30 without damaging rotating fan 3A and rotating shaft 30.

Moreover, in the present exemplary embodiment, unlike the first exemplary embodiment, a method is adopted by which rotating fan 3A is removed from rotating shaft 30 using the rolled screw. Therefore, a thread strength of the rolled screw can be made higher than that of the screw groove (female thread) formed by cutting or the like in the first exemplary embodiment. Therefore, even in the case of fan boss 100A having a higher press-fit strength, rotating fan 3A can be easily removed from rotating shaft 30.

Further, in the first exemplary embodiment, it has been required to machine the screw groove on the inner surface of second hole part 112, but in the present exemplary embodiment, the machining of a screw groove on the inner surface of second hole part 112 is not required. This makes it possible to realize fan boss 100A with lower cost. In addition, electric blower 1A with lower cost can be realized.

As described above, fan boss 100A in the present exemplary embodiment corresponding to the boss is a boss attached to rotating shaft 30 corresponding to the shaft, and has through hole 110A extending along the longitudinal direction of the shaft. Through hole 110A has first hole part 111 into which the tip end part of the shaft is press-fitted when the shaft is inserted from one end of through hole 110A to the predetermined position in through hole 110A, and second hole part 112A having the inner diameter smaller than first hole part 111.

With this configuration, rotating fan 3A is fixed to rotating shaft 30 by press-fitting. Therefore, it is possible to eliminate the amount of unbalance generated when rotating fan 3A is attached to rotating shaft 30. Therefore, the rotational vibration can be suppressed, and electric blower 1A with low vibration can be realized.

Further, the inner surface of second hole part 112A may be a smooth surface.

Further, it is preferable that the inner diameter of second hole part 112A have a dimension into which the rolled screw can be screwed.

### (Third exemplary embodiment)

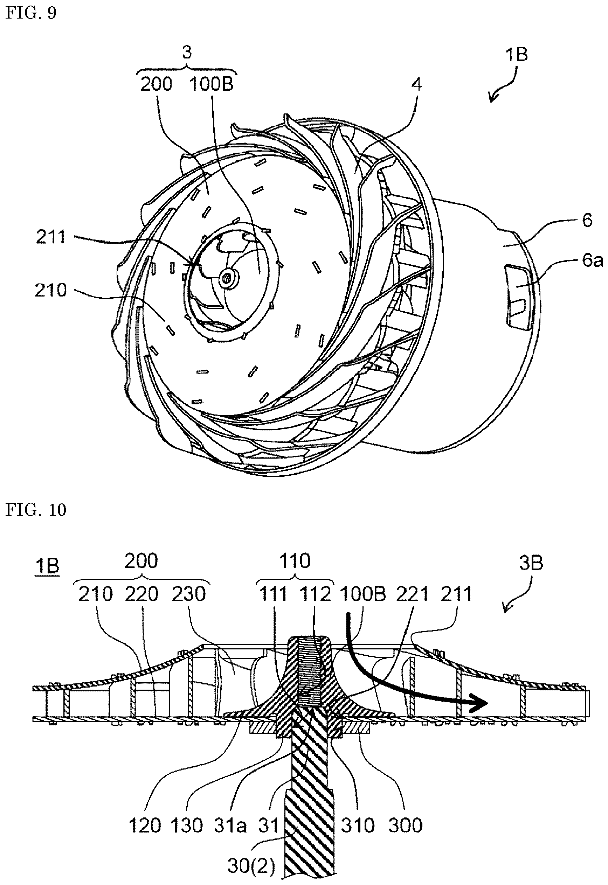

Next, electric blower 1B according to a third exemplary embodiment is described with reference to FIG. 9 and FIG. 10. FIG. 9 is a perspective view of electric blower 1B according to the third exemplary embodiment with fan case 7 removed. FIG. 10 is a cross-sectional view of rotating fan 3B used in electric blower 1B of the above.

Electric blower 1B according to the present exemplary embodiment differs from electric blower 1 according to the first exemplary embodiment in a shape of fan boss 100B of rotating fan 3B. Specifically, similarly to fan boss 100 in the first exemplary embodiment, fan boss 100B in the present exemplary embodiment has through hole 110 constituted of first hole part 111 and second hole part 112. In fan boss 100B of the present exemplary embodiment, an outer shape of fan boss 100B at a portion corresponding to second hole part 112 is formed to have an outer diameter gradually increasing from the other end of through hole 110 toward the one end of through hole 110. Specifically, the outer shape of fan boss 100B at the portion corresponding to second hole part 112 is a substantially truncated cone shape. That is, the outer shape of fan boss 100B corresponding to second hole part 112 has a spinner shape.

In the present exemplary embodiment, a height of fan boss 100B at the portion corresponding to second hole part 112 is made high. An upper end of fan boss 100B protrudes beyond suction port 211 of first side plate 210 of impeller 200. That is, a top surface of fan boss 100B (opening surface on a side of the other end of through hole 110) is located outside a surface of first side plate 210 of impeller 200.

Other configurations of electric blower 1B according to the present exemplary embodiment are the same as electric blower 1 according to the first exemplary embodiment. For example, also in the present exemplary embodiment, rotating shaft 30 is press-fitted and fixed to fan boss 100B of rotating fan 3B. Specifically, tip end part 31 of rotating shaft 30 is press-fitted into first hole part 111 of through hole 110 in fan boss 100B. A screw groove is formed on an inner surface of second hole part 112. Therefore, in the case when rotating fan 3B press-fitted and fixed to rotating shaft 30 of the electric motor 2 is removed from rotating shaft 30, the removal can be performed in the same manner as in the first exemplary embodiment.

As described above, according to fan boss 100B and electric blower 1B in the present exemplary embodiment, as in the first exemplary embodiment, rotating fan 3B is fixed to rotating shaft 30 by press-fitting. As a result, it is possible to eliminate the amount of unbalance generated when rotating fan 3B is attached to rotating shaft 30. Therefore, the rotational vibration can be suppressed, and electric blower 1B with low vibration can be realized.

In the present exemplary embodiment, even in the case of rotating fan 3B press-fitted and fixed to rotating shaft 30, rotating fan 3B can be easily removed from rotating shaft 30 without damaging rotating fan 3B and rotating shaft 30.

In the present exemplary embodiment, the outer shape of fan boss 100B at the portion corresponding to second hole part 112 is formed to have the outer diameter gradually increasing from the other end of through hole 110 toward the one end of through hole 110. Specifically, the outer shape of fan boss 100B at the portion corresponding to second hole part 112 is a substantially truncated cone shape, and fan boss 100B is formed as a spinner shape.

Thus, the air sucked from suction port 211 of impeller 200 of rotating fan 3B is smoothly guided into rotating fan 3B without generating turbulence. As a result, the flow of the air can be improved. Therefore, an efficiency of electric blower 1B can be improved. Further, electric blower 1B with much lower noise can be realized.

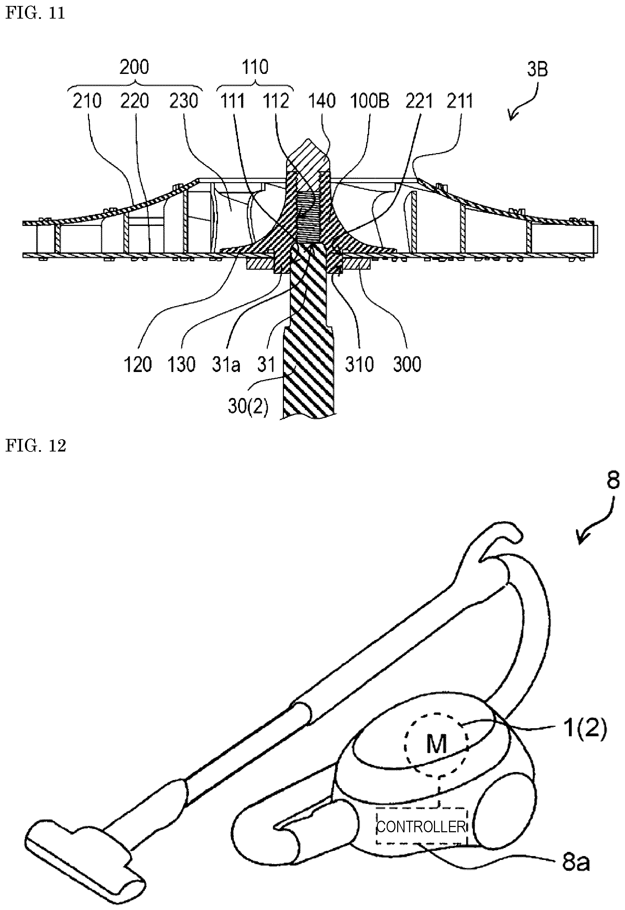

FIG. 11 is a cross-sectional view of a rotating fan used in electric blower 1B according to a modified example of the third exemplary embodiment. As shown in FIG. 11, cover 140 that covers an opening (screw insertion port) of second hole part 112 may be attached to a top of second hole part 112 of fan boss 100B. An outer surface of cover 140 is preferably flush with the outer surface of the fan boss 100B. In this manner, by covering the opening of second hole part 112 with cover 140, the turbulence of the air sucked from suction port 211 can be further reduced. Therefore, the flow of the air can be further improved.

As described above, in the fan boss 100B of the present exemplary embodiment corresponding to the boss, the outer shape of the boss facing second hole part 112 is formed to have the outer diameter gradually increasing from the other end of through hole 110 to the one end of through hole 110.

As a result, it is possible to eliminate the amount of unbalance generated when rotating fan 3B is attached to rotating shaft 30. Therefore, the rotational vibration can be suppressed, and electric blower 1B with low vibration can be realized.

Further, the outer shape of second hole part 112 preferably is a substantially truncated cone shape.

### (Fourth exemplary embodiment)

A fourth exemplary embodiment describes electric devices using electric blower 1 or 1A or 1B according to the first to third exemplary embodiments. In this embodiment, the electric device using electric blower 1 according to the first exemplary embodiment is described, however, the electric device may use electric blower 1A or 1B according to the second or third exemplary embodiment.

An electric vacuum cleaner using electric blower 1 is described with reference to FIG. 12. FIG. 12 is a schematic diagram showing an example of electric vacuum cleaner 8 according to the fourth exemplary embodiment.

As shown in FIG. 12, electric vacuum cleaner 8 includes electric blower 1 and controller 8a that controls electric blower 1 (electric motor 2). Electric vacuum cleaner 8 sucks dust or air by electric blower 1 to perform cleaning. Controller 8a controls electric blower 1 (electric motor 2). For example, controller 8a stops or starts the suction by electric blower 1, or adjusts an amount of suction.

As described above, electric vacuum cleaner 8 according to the present exemplary embodiment uses electric blower 1 according to the first exemplary embodiment, and accordingly, an electric vacuum cleaner with low noise can be realized.

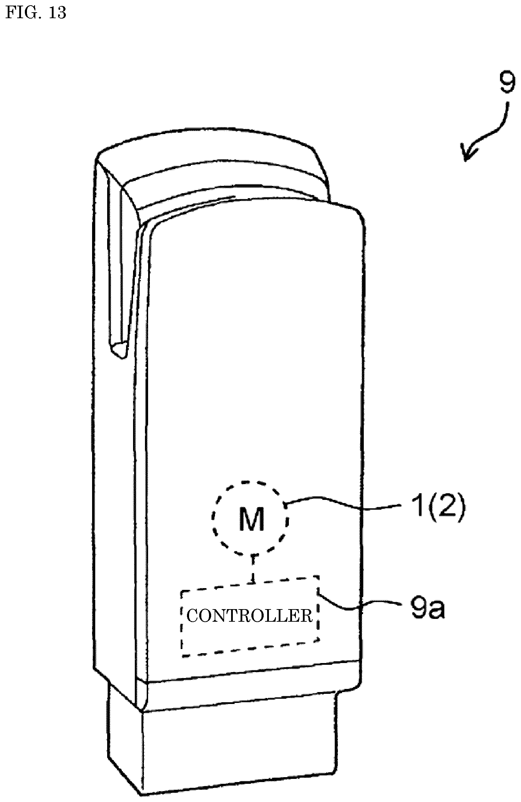

Further, as shown in FIG. 13, electric blower 1 may be used in hand dryer 9 for drying hands with wind. FIG. 13 is a schematic diagram showing an example of hand dryer 9 according to the fourth exemplary embodiment.

As shown in FIG. 13, hand dryer 9 includes electric blower 1 and controller 9a for controlling electric blower 1 (electric motor 2). In hand dryer 9, electric blower 1 sends hot or cold air. Controller 9a controls electric blower 1 (electric motor 2). For example, controller 9a stops or starts the blowing by electric blower 1, or adjusts a blown air volume.

As described above, hand dryer 9 according to the present exemplary embodiment uses electric blower 1 according to the first exemplary embodiment, and accordingly, a hand dryer with low noise can be realized.

### (Modified example)

As described above, the electric motor, the electric blower, the electric vacuum cleaner, the hand dryer, and the like according to the present disclosure have been described based on the exemplary embodiments. However, the present disclosure is not limited to the exemplary embodiments.

For example, the case has been described in which the fan boss and the rotating fan in the first to third exemplary embodiments are used for the commutator motor with brushes. However, the present disclosure is not limited to this, and may be used for a brushless motor or an induction motor that does not use a winding coil and a commutator.

Further, the case has been described in which the fan boss in each of the first to third exemplary embodiments is attached to the rotating shaft of the rotor of the electric motor. However, the present disclosure is not limited to this. The fan boss in each of the first to third exemplary embodiments may be attached to a shaft of a pulley or an encoder. The fan boss in each of the first to third exemplary embodiments is not limited to the one into which the rotating shaft is press-fitted, but may be the one into which any shaft is press-fitted.

Further, the case has been described in which the electric blower according to each of the first to third exemplary embodiments is applied to the electric vacuum cleaner or the hand dryer. However, the present disclosure is not limited to this, and the electric blower may be applied to automobile equipment, or may be applied to other household appliances or industrial equipment.

In addition, a mode obtained by performing various modifications that can be conceived by those skilled in the art to the exemplary embodiments, or a mode realized by arbitrarily combining the constituents and functions in the exemplary embodiments without departing from the gist of the present disclosure are also included in the present disclosure.

### INDUSTRIAL APPLICABILITY

A technology of the present disclosure can be used in various electric devices such as an electric vacuum cleaner equipped with an electric blower.

### REFERENCE MARKS IN THE DRAWINGS

- 1, 1A, 1B: electric blower
- 2: electric motor
- 3, 3A, 3B: rotating fan
- 4: air guide
- 4a: diffuser blade
- 5: bracket
- 6: frame
- 6a: exhaust port
- 7: fan case
- 7a: intake port
- 8: electric vacuum cleaner
- 8a, 9a: controller
- 9: hand dryer
- 10: rotor
- 11: core
- 12: coil
- 20: stator
- 30: rotating shaft
- 31, 410: tip end part
- 31a: tip end surface
- 40: commutator
- 50: brush
- 60: first bearing
- 70: second bearing
- 100, 100A, 100B: fan boss (boss)
- 110, 110X, 110A, 221, 310: through hole
- 111: first hole part
- 111a, 112a: inner side surface
- 111b: bottom surface
- 112, 112A: second hole part
- 120: flange part
- 130: cylindrical part
- 140: cover
- 200: impeller
- 210: first side plate
- 211: suction port
- 220: second side plate
- 230: fan blade
- 300: back plate
- 400: male screw

## Claims

1. A boss attached to a shaft, the boss comprising a through hole extending along a longitudinal direction of the shaft,
wherein the through hole includes a first hole part to which a tip end part of the shaft is press-fitted and fixed when the shaft is inserted from one end of the through hole to a predetermined insertion position in the through hole, and a second hole part that has a screw groove formed on an inner surface on a side closer to another end of the through hole than the predetermined insertion position.

2. The boss according to claim 1, wherein an inner diameter of the first hole part is larger than an inner diameter of the second hole part.

3. The boss according to claim 1, wherein an inner diameter of the first hole part and an inner diameter of the second hole part are equal to each other.

4. The boss according to any one of claims 1 to 3, wherein a shape of the screw groove is a shape that allows a standardized screw to be screwed into the screw groove.

5. A boss attached to a shaft, the boss comprising a through hole extending along a longitudinal direction of the shaft,
wherein the through hole includes a first hole part to which a tip end part of the shaft is press-fitted when the shaft is inserted from one end of the through hole to a predetermined position in the through hole, and a second hole part that has an inner diameter smaller than an inner diameter of the first hole part.

6. The boss according to claim 5, wherein an inner surface of the second hole part is a smooth surface.

7. The boss according to claim 5 or 6, wherein the inner diameter of the second hole part has a dimension that allows a rolled screw to be screwed into the second hole part.

8. The boss according to any one of claims 1 to 7, wherein an outer shape of the boss facing the second hole part is formed to have an outer diameter gradually increasing from an other end of the through hole toward the one end of the through hole.

9. The boss according to claim 8, wherein the outer shape of the second hole part is a substantially truncated cone shape.

10. A rotating fan comprising:
the boss according to any one of claims 1 to 9; and
an impeller that has the boss fixed to the impeller.

11. An electric blower comprising:
the rotating fan according to claim 10; and
a shaft whose tip end part is press-fitted and fixed to the boss of the rotating fan.

12. An electric vacuum cleaner comprising:
the electric blower according to claim 11; and
a controller that controls the electric blower.

13. A hand dryer comprising:
the electric blower according to claim 11; and
a controller that controls the electric blower.
